# EUROPÄISCHE PATENTANMELDUNG

(11) **EP 2 574 897 A2**
(43) Veröffentlichungstag der Anmeldung: **03.04.2013**
(21) Anmeldenummer: 12186578.6
(22) Anmeldetag: 28.09.2012
(51) Int. Cl.: G01M 7/08

(54) **Verfahren zur Prüfung einer Aufzugtür auf Rückhaltestabilität bei Aufprall eines Elektromobils**

(30) Priorität: 30.09.2011 DE 102011083935
(71) Anmelder: Franz Xaver Meiller Fahrzeug- und Maschinenfabrik-GmbH & Co KG, 80997 München (DE)
(72) Erfinder: Lernet, Thomas E., 86453 Dasing (DE)
(74) Vertreter: Tiesmeyer, Johannes

(57) **Zusammenfassung**

Die Erfindung betrifft ein Verfahren zur Prüfung einer Aufzugtür (4) mit einer Aufzugtürschwelle (10) und mit Türführungen auf Rückhaltestabilität in einer spezifischen Unfallsituation des Aufpralls eines Elektromobils auf eine solche Aufzugtür (4), wobei eine solche Aufzugtür (4) inklusive Aufzugtürschwelle (10) und Türführungen auf einem Prüfstand (2) installiert wird, um den bestimmungsgemäßen Einbauzustand der Aufzugtür (4) in einer Aufzuganlage zu simulieren, und wobei auf die auf dem Prüfstand (2) installierte Aufzugtür (4) ein Aufprall eines Elektromobils durch einen Pendelschlag mit einem Pendelkörper (18) in einem Pendelschlagversuch simuliert wird, bei dem die Versuchsparameter Pendelkörpermasse, kinetische Energie des Pendelkörpers (18) bei Auftreffen auf die Aufzugtür (4) und Auftreffstelle an der Aufzugtür (4) entsprechend einer Belastungssituation beim Aufprall eines betreffenden Elektromobils gewählt sind.

## Beschreibung

Die Erfindung betrifft ein Verfahren zur Prüfung einer Aufzugtür mit einer Aufzugtürschwelle und mit Türführungen auf Rückhaltestabilität in einer spezifischen Unfallsituation des Aufpralls eines Elektromobils auf eine solche Aufzugtür.

Elektromobile der hier betrachteten Art sind üblicherweise kleine, mehrspurige, offene, elektrisch angetriebene Leichtfahrzeuge für den Transport einer Person. Sie werden auch als Scooter bezeichnet und werden überwiegend von älteren Menschen und von Personen mit eingeschränkter Mobilität benutzt. Die Verbreitung solcher Elektromobile hat in den letzten Jahren stark zugenommen. Leider ist damit einhergehend auch die Zahl von Unfällen mit Elektromobilen gestiegen. Darunter waren auch Unfälle, bei denen Elektromobile auf geschlossene Aufzugschachttüren aufgeprallt sind. In einigen Fällen ist es dabei zum Durchbruch der Aufzugschachttür gekommen mit der Folge, dass das Elektromobil mitsamt Fahrer in den Aufzugschacht gestürzt ist. Häufig war Fehlbedienung der Elektromobile Ursache solcher Unfälle.

Aufgabe der vorliegenden Erfindung ist es, in Bezug auf die genannte Unfallsituation des Aufpralls eines Elektromobils auf eine Aufzugtür krititsche Schwachstellen von Aufzugtüren, insbesondere Aufzugschachttüren zu ermitteln als Voraussetzung dafür, diese zukünftig sicherer gestalten zu können, so dass solch schwere Unfälle weitestgehend verhindert werden können.

Zur Lösung dieser Aufgabe wird ein Verfahren zur Prüfung einer Aufzugtür mit einer Aufzugtürschwelle und mit Türführungen auf Rückhaltestabilität in einer spezifischen Unfallsituation des Aufpralls eines Elektromobils auf eine solche Aufzugtür vorgeschlagen, welches dadurch gekennzeichnet ist, dass eine solche Aufzugtür inklusive Aufzugtürschwelle und Türführungen auf einem Prüfstand installiert wird, um den bestimmungsgemäßen Einbauzustand der Aufzugtür in einer Aufzuganlage zu simulieren, und dass auf die auf dem Prüfstand installierte Aufzugtür ein Aufprall eines Elektromobils durch einen Pendelschlag mit einem Pendelkörper in einem Pendelschlagversuch simuliert wird, bei dem die Versuchsparameter Pendelkörpermasse, kinetische Energie des Pendelkörpers bei Auftreffen auf die Aufzugtür und Auftreffstelle an der Aufzugtür entsprechend einer Belastungssituation beim Aufprall eines betreffenden Elektromobils gewählt sind.

Die Erfindung richtet sich insbesondere an Hersteller von Aufzugtüren bzw. Aufzügen und an technische Prüfinstitutionen, die die Sicherheit von Aufzuginstallationen zu gewährleisten bzw. zu zertifizieren haben.

Der Pendelschlagversuch ist ein bekanntes gängiges Werkstoffprüfverfahren zur Ermittlung von Materialeigenschaften. Es ist auch bekannt, einen Pendelschlagversuch zur Prüfung der Materialfestigkeit von Türblättern aus Glas oder Metall durchzuführen, wobei diese Türblätter als Einzelkomponenten in einem festen Rahmen eines Pendelschlagprüfstandes eingebaut werden. Bei dem bekannten Pendelschlagversuch wird ein Pendelkörper, der an einem Seil oder dgl. hängt, aus seiner Ruhelage um ein bestimmtes Maß ausgelenkt und dann losgelassen, so dass er eine Pendelbewegung zu dem eingespannten Türblatt ausüben kann. Der Versuch ist so gestaltet, dass der Pendelkörper exakt die Mitte (Kreuzungspunkt der Diagonalen) des Türblatts trifft. Es werden dazu genormte Prüfkörper mit vorbestimmten Formen und Massen als Pendelkörper verwendet. Das Versuchsergebnis wird visuell und mit messtechnischen Mitteln ausgewertet, um Deformationen des Türblatts qualitativ und quantitativ zu erfassen.

Bei der vorliegenden Erfindung geht es jedoch nicht um die Werkstoffprüfung einer bestimmten Komponente der Aufzugtür, sondern um die Simulation einer spezifischen Unfallsituation an einer kompletten Aufzugtürinstallation mit allen Komponenten der Aufzugtür einschließlich Aufzugtürschwelle und Türführungen. Die Aufzugtür inklusive Aufzugtürschwelle und Türführungen wird so auf dem Prüfstand aufgebaut, wie sie in der Praxis auch in einer betreffenden Aufzugsanlage zu installieren wäre. Der Aufprall eines Elektromobils auf die Aufzugtür wird durch den Aufprall des Pendelkörpers in dem Pendelschlagversuch simuliert, wobei die Versuchsparameter entsprechend angepasst sind, um die Simulation möglichst genau durchführen zu können.

Hierzu wird vorzugsweise ein Pendelkörper verwendet, der eine konvex geformte Vorderseite aufweist, mit der er beim Pendelschlagversuch die Aufzugtür beaufschlagt. Zahlreiche Elektromobile sind an ihrer Vorderseite entsprechend abgerundet. Die konvex geformte Vorderseite des Pendelkörpers ist somit in der typischen Form zahlreicher Elektromobile nachgebildet, um die betrachtete Unfallsituation auch insoweit möglichst exakt zu simulieren. Selbstverständlich können im Rahmen der Erfindung auch andere angepasste Pendel körper benutzt werden.

Der verwendete Pendelkörper ist gemäß einer Variante der Erfindung scheibenförmig mit einer Scheibendicke im Bereich zwischen 80 mm und 250 mm, vorzugsweise im Bereich zwischen 100 mm und 150 mm ausgebildet. Er sollte aus einem Metall, vorzugsweise Stahl hergestellt sein. Bei den genannten Scheibendicken ergibt sich dann ein auch von den übrigen Dimensionen nicht zu großer Pendelkörper, der im Versuch noch gut handhabbar ist. Der Pendelkörper kann an seiner Vorderseite mit einer Gummileiste oder dgl. versehen sein.

Vorzugsweise hat der verwendete Pendelkörper eine Masse in dem Bereich zwischen 175 kg und 250 kg, vorzugsweise im Bereich zwischen 210 kg und 230 kg. Der in aussagekräftigen Testversuchen verwendete Pendelkörper hat eine Masse von 220 kg.

Bei nicht zu breiten Aufzugtüren, also etwa bei Aufzugtüren mit einer Breite kleiner 1500 mm wird der Pendelschlagversuch vorzugsweise so durchgeführt, dass der Pendelkörper die Aufzugtür in deren Breitenmitte beaufschlagt. Bei zweiflügligen und vierflügligen Türen ist dies üblicherweise der mittige Türspalt.

Bei breiteren Aufzugtüren können dem Testprogramm entsprechend auch andere Auftreffstellen gewählt werden.

Was die Höhe der Auftreffstelle anbelangt, so wird der Pendelschlagversuch vorzugsweise so durchgeführt, dass der Pendelkörper die Aufzugtür in einer Höhe zwischen 100 mm und 400 mm, vorzugsweise in einer Höhe zwischen 200 mm und 300 mm und besonders bevorzugt in einer Höhe zwischen 250 mm, jeweils gemessen von der Türschwellenoberseite, beaufschlagt. Diese Höhenvorgabe wurde gewählt, da sie in etwa der typischen Bodenfreiheit zahlreicher Elektromobile entspricht.

Um auch unter energetischen Gesichtspunkten die Aufprallsituation eines Elektromobils möglichst zutreffend zu simulieren, wird das Pendel bei dem Pendelschlagversuch vorzugsweise so ausgelenkt, dass der Pendelkörper mit einer kinetischen Energie auf die Aufzugtür trifft, die der kinetischen Energie eines fahrenden Elektromobils mit der Gesamtmasse aus einem Bereich zwischen 120 kg und 250 kg, vorzugsweise zwischen 130 kg und 200 kg, und der Geschwindigkeit aus einem Bereich zwischen 5 km/h und 12 km/h, vorzugsweise zwischen 6 km/h und 9 km/h, entspricht. Bei der genannten Gesamtmasse ist auch die Masse des Fahrers berücksichtigt.

Bei einem Pendelkörper mit einer Masse von etwa 220 kg ist dies erreichbar, wenn der Pendelkörper so ausgelenkt wird, dass er beim Auftreffen auf die Aufzugtür einen Höhenunterschied im Bereich zwischen 0,2 m und 0,3 m überwindet.

Nach dem Pendelschlagversuch wird die Aufzugtür untersucht auf Schwachstellen, die im Ernstfall zu einem Durchbruch der Aufzugtür oder zu einem zu großen unteren Spalt zwischen den Aufzugtürblättern und der Aufzugtürschwelle geführt haben könnten. Untersucht werden nicht nur die Deformation der Türblätter, sondern auch der Zustand der oberen und unteren Türführungen, der Schwelle usw.

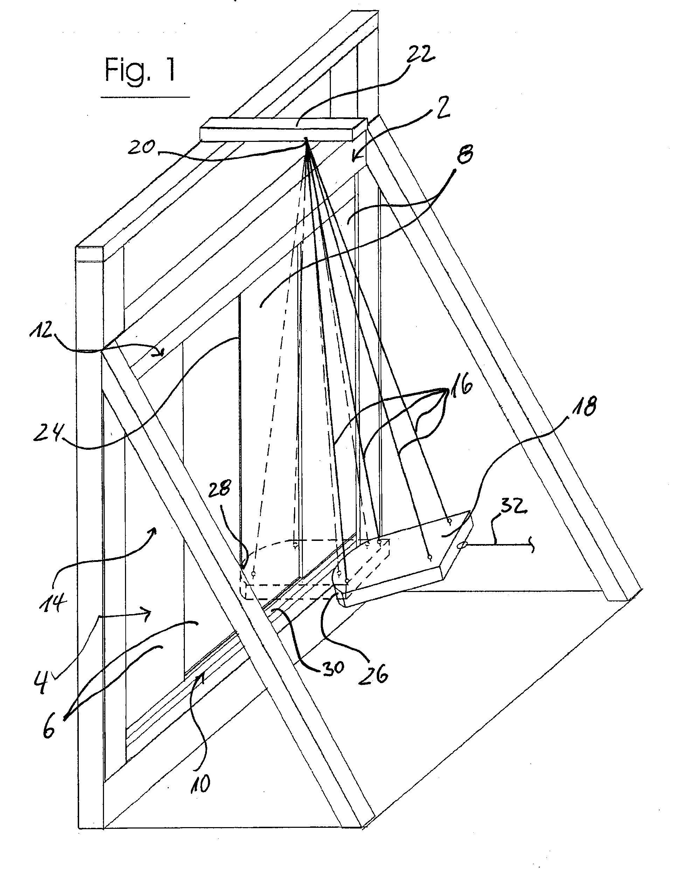

Die Erfindung wird nachstehend unter Bezugnahme auf die Figur 1 erläutert.
- Fig. 1: zeigt in teils schematischer Darstellung einen Prüfstand zur Durchführung des Verfahrens nach der Erfindung.

Der Prüfstand hat einen Rahmen 2, in dem eine komplette Aufzugtür 4 fest eingebaut ist, und zwar so, wie sie auch in einer Aufzuganlage zu installieren wäre. Es handelt sich bei der Aufzugtür 4 um eine Schachtschiebetür mit zwei Teleskoptürblattpaaren 6, 8, die an ihrer Unterseite in Führungen der Aufzugtürschwelle 10 horizontal bewegbar geführt sind. An ihrem oberen Ende sind die Türblattpaare 6, 8 in oberen Führungen an einem sog. Kämpfer 12 horizontal bewegbar geführt. In Fig. 1 ist die Außenseite 14 der Schachtschiebetür 4 zu erkennen. Dies ist die Seite, die in bestimmungsgemäßer Einbaulage der Schachtschiebetür 4 an einem Aufzugschacht von dem Schacht abgewandt ist.

Zur Simulation des Aufpralls eines Elektromobils auf die Außenseite 14 der Aufzugsachachttür 4 wird gemäß dem Verfahren der vorliegenden Erfindung ein Pendelschlagversuch durchgeführt. Hierzu dient ein im Beispielsfall an vier Seilen 16 aufgehängter Pendelkörper 18 aus Stahl. Die Seile sind an einem oberen Befestigungspunkt 20 an einem Ausleger 22 des Rahmens 2 befestigt, so dass der Pendelkörper 18 aus der mit durchgezogenen Linien dargestellten ausgelenkten Stellung heraus eine Pendelbewegung zu der Aufzugschachttür 4 ausführen kann. Dabei trifft er im Beispielsfall die Breitenmitte der Aufzugtür 4 an dem Türspalt 24 zwischen den beiden Teleskoptürblattpaaren 6, 8, wie dies mit gestrichelten Linien in Fig. 1 angedeutet ist. Es handelt sich hierbei um eine Stelle, an der die Aufzugtür 4 empfindlich gegen Stoßbelastung von außen ist.

Der Pendelkörper 18 ist ein scheibenförmiger Block mit einer konvexen, d. h. bogenförmigen Vorderseite 26. Die Form dieser Vorderseite 26 und die Scheibendicke des Blocks sind so gewählt, dass sie der Kontur der Vorderseite gängiger Elektromobile zumindest näherungsweise entsprechen.

Der aus der Auslenkstellung losgelassene Pendelkörper 18 trifft mit seiner vorderen Mitte an einer Stelle 28 auf die Aufzugtür 4, wobei diese Stelle 28 einen vertikalen Abstand von 250 mm zur Oberkante 30 der Türschwelle 10 hat. Dieses Höhenmaß ist ebenfalls so gewählt, dass es der Höhe vorstehender Teile gängiger Elektromobile entspricht. Mit dem gezeigten Versuchsaufbau gemäß Fig. 1 kann z. B. der Aufprall eines Elektromobils mit einer Gesamtmasse (inklusive Masse des Fahrers) von 200 kg und einer Aufprallgeschwindigkeit von etwa 8 km/h simuliert werden, wenn der Pendelkörper 18 mit einer Masse von 220 kg einen Höhenunterschied von 250 mm zwischen der mit durchgezogenen Linien gezeichneten Auslenkstellung und der mit gestrichelten Linien gezeichneten Aufprallstellung überwindet. Selbstverständlich können durch Änderung der Masse des Pendelkörpers 18 und/oder durch Änderung der Auslenkung des Pendelkörpers 18 andere Aufprallgeschwindigkeiten und/oder andere Massen eines Elektromobils simuliert werden. Es kann somit erfindungsgemäß die Rückhaltestabilität einer Aufzugtür in Bezug auf einen daran aufprallenden Gegenstand im Allgemeinen und ein darauf aufprallendes Elektromobil im Besonderen geprüft werden, also die Stabilität gegen einen Durchbruch der Tür oder eine zu große untere Spaltbildung zwischen den unteren Türblatträndern und der Schwelle. Eine Spaltbreite von 150 mm und mehr sollte als zu geringe Rückhaltestabilität gewertet werden.

Mit 32 ist in Fig. 1 ein Auslenkseil an der Rückseite des Pendelkörpers 18 gekennzeichnet. Durch Ziehen an diesem Seil 32 kann der Pendelkörper in eine betreffende Auslenkstellung gebracht werden. Durch Ausklinken oder Loslassen des Seils 32 wird der Pendelkörper 18 dann aus der Auslenkstellung heraus freigegeben, so dass er sich unter der Wirkung der Schwerkraft gegen die Aufzugtür 4 bewegt. Im Beispielsfall liegt der Pendelkörper 18 in der gestrichelt gezeigten Auftreffstellung mit seinem Schwerpunkt im Wesentlichen vertikal unterhalb des Aufhängpunktes 20. Diese Beziehung ist jedoch bei Bedarf modifizierbar.

## Patentansprüche

1. Verfahren zur Prüfung einer Aufzugtür (4) mit einer Aufzugtürschwelle (10) und mit Türführungen auf Rückhaltestabilität in einer spezifischen Unfallsituation des Aufpralls eines Elektromobils auf eine solche Aufzugtür (4),
**dadurch gekennzeichnet,**
**dass** eine solche Aufzugtür (4) inklusive Aufzugtürschwelle (10) und Türführungen auf einem Prüfstand (2) installiert wird, um den bestimmungsgemäßen Einbauzustand der Aufzugtür (4) in einer Aufzuganlage zu simulieren, und
**dass** auf die auf dem Prüfstand (2) installierte Aufzugtür (4) ein Aufprall eines Elektromobils durch einen Pendelschlag mit einem Pendelkörper (18) in einem Pendelschlagversuch simuliert wird, bei dem die Versuchsparameter Pendelkörpermasse, kinetische Energie des Pendelkörpers (18) bei Auftreffen auf die Aufzugtür (4) und Auftreffstelle an der Aufzugtür (4) entsprechend einer Belastungssituation beim Aufprall eines betreffenden Elektromobils gewählt sind.

2. Verfahren nach Anspruch 1, **dadurch gekennzeichnet, dass** der verwendete Pendelkörper (18) eine konvex geformte Vorderseite (26) aufweist, mit der er beim Pendelschlagversuch die Aufzugtür (4) beaufschlagt.

3. Verfahren nach Anspruch 1 oder 2, **dadurch gekennzeichnet, dass** der verwendete Pendelkörper (18) scheibenförmig mit einer Scheibendicke im Bereich zwischen 80 mm und 250 mm, vorzugsweise im Bereich zwischen 100 mm und 150 mm ausgebildet ist.

4. Verfahren nach Anspruch 1, 2 oder 3, **dadurch gekennzeichnet, dass** der verwendete Pendelkörper (18) eine Masse in dem Bereich zwischen 175 kg und 250 kg, vorzugsweise im Bereich zwischen 210 kg und 230 kg hat.

5. Verfahren nach einem der vorhergehenden Ansprüche, **dadurch gekennzeichnet, dass** der Pendelschlagversuch so durchgeführt wird, dass der Pendelkörper (18) die Aufzugtür (4) in deren Breitenmitte beaufschlagt.

6. Verfahren nach einem der vorhergehenden Ansprüche, **dadurch gekennzeichnet, dass** der Pendelschlagversuch so durchgeführt wird, dass der Pendelkörper (18) die Aufzugtür (4) in einer Höhe zwischen 100 mm und 400 mm, vorzugsweise in einer Höhe zwischen 200 mm und 300 mm und besonders bevorzugt in einer Höhe von 250 mm, jeweils gemessen von der Türschwellenoberseite (30), beaufschlagt.

7. Verfahren nach einem der vorhergehenden Ansprüche, **dadurch gekennzeichnet, dass** der Pendelkörper (18) beim Pendelschlagversuch so ausgelenkt wird, dass er mit einer kinetischen Energie auf die Aufzugtür (4) trifft, die der kinetischen Energie eines fahrenden Elektromobils mit der Gesamtmasse aus einem Bereich zwischen 120 kg und 250 kg, vorzugsweise zwischen 130 kg und 200 kg, und der Geschwindigkeit aus einem Bereich zwischen 5 km/h und 12 km/h, vorzugsweise zwischen 6 km/h und 9 km/h, entspricht.

8. Verfahren nach Anspruch 7, **dadurch gekennzeichnet, dass** der Pendelkörper (18) beim Pendelschlagversuch so ausgelenkt wird, dass er beim Auftreffen auf die Aufzugtür (4) einen Höhenunterschied aus dem Bereich zwischen 100 mm und 400 mm, vorzugsweise zwischen 200 mm und 300 mm überwindet.
